# EUROPEAN PATENT SPECIFICATION

(11) **EP 1 658 593 B1**
(45) Date of publication and mention of the grant of the patent: **24.12.2008**
(21) Application number: 03818398.4
(22) Date of filing: 29.08.2003
(51) Int. Cl.: G07F 17/26, G06K 9/00, H04M 1/24

(54) **METHOD AND DEVICE FOR CUSTOMIZED PICTURE-BASED USER IDENTIFICATION AND AUTHENTICATION**
VERFAHREN UND EINRICHTUNG ZUR ANGEPASSTEN BILDGESTÜTZTEN BENUTZERIDENTIFIKATION UND AUTHENTIFIKATION
PROCEDE ET DISPOSITIF D'IDENTIFICATION ET D'AUTHENTIFICATION UTILISATEUR PERSONNALISEES A FONCTIONNEMENT PICTOGRAPHIQUE

(43) Date of publication of application: 24.05.2006
(73) Proprietor: Nokia Corporation, 02150 Espoo (FI)
(72) Inventor: O'DONOGHUE, Niall, FIN-37370 Narva (FI)
(74) Representative: Becker Kurig Straus
(86) International application number: PCT/IB2003/003604
(87) International publication number: WO 2005/022473

(56) References cited:
- EP-A- 1 315 072
- EP-A1- 0 990 970
- EP-A1- 1 276 301
- EP-A2- 1 134 710
- US-A1- 2002 167 547
- US-A1- 2003 053 662
- US-A1- 2003 064 688
- US-B1- 6 307 541

## Description

The present invention relates to a method of personal and personalized authentication for mobile terminals. It also relates to personalized authentication to mobile terminals that provides significant benefits in security, reliability, usability and cost over traditional password or personal identification number (PIN) based systems.

From document US6307541 A a method and a system is known for inputting Chinese characters into an electronic device having a reduced keyboard, such as a mobile-phone handset with a CCITT-compliant (Consultative Committee in International Telegraphy and Telephony) keyboard having only 12 keys. The Chinese-character input method of document US6307541 A allows the user to input Chinese characters to the data processor through a plurality of virtual keyboards which collectively display a set of phonetic symbols, such as those in the Mandarin Phonetic Symbol Set or the Roman Symbol Set, so that the user can perform the input operation through a pronunciation-based input scheme.

A common method to authenticate a user to an entity that requires authentication is a username and password pair. The user enters the usemame and corresponding password and if these match a pre-stored counterpart the user is granted access to, for example, a mobile device. Traditionally, passwords have been character strings of varying length. For example, the PIN code of a mobile device is a four-digit string. However, humans are not extremely good at recalling names and even worse, at recalling random sets of characters or numbers that typify PIN codes today. Because of this, it is quite common that users select simple passwords that are vulnerable to e.g. dictionary attacks, where simple words or numerical combinations are tried at high-speed time after time. There are studies that show that humans have a very good visual memory and that people are extremely good at recognizing faces. Hence passwords systems that use pictures (e.g. faces) instead of characters have been developed.

Therefore, it is desirable to improve passwords systems that use pictures.

It is further desirable to facilitate the use of passwords systems that use pictures, by increasing the ability of users to remember their terminal authentication passkeys.

The present invention provides a method with the features of claim 1, a computer grogram product with the features of claim 7 and a device having the features of claims 8. Preferred embodiments of the present invention are disclosed in the dependent claims.

There is provided a method for authorizing the use of an electronic device or unlocking a locked electronic device by picture identification. The method comprises retrieving a number of pictures from a picture passkey library and displaying at least a subset of them on a display of said user device. The method further comprises receiving user input representing an input code by which at least one of said pictures is selected and comparing said selected picture(s) /code with a pre-stored identification or access data. If said received code matches with said pre-stored data an unlocking or authorizing operation is performed. In the method of the present invention said pictures in said picture passkey library comprise user-generated pictures, that have been received from a built-in camera.

By retrieving a number of pictures from a picture passkey library, the pictures are made accessible to the device. By displaying a number or a selection of pictures on a display of said user device, a pre-defined selection of pictures can be presented to the user. It may be necessary to select a subset of the pictures e.g. in case that more pictures are stored in said picture passkey library than actually can be displayed simultaneously.

By receiving a user input that represents e.g. a code or a sequence comprising at least one marked or selected picture, the user enters an identification, to proof his access rights. The code or sequence can comprise only pictures or can comprise a combination of characters and pictures. For security considerations the code length can be determined to comprise at least 1, 2, 3, 4 or more code elements/pictures. The code length may be prescribed by the system or may be selectable by a user. The code may have to be terminated or confirmed by pressing an 'enter' key.

By comparing said identification input with a pre-stored identification/access data, a conventional unlocking procedure can be used, wherein the elements to be compared can differ from conventional ID-number procedures.

If said received identification input matches with said pre-stored identification data, the device performs an unlocking or authorizing operation, to grant access to the device.

The method of the present invention provides that said pictures in said picture passkey library, are at least partially user-generated. In contrast to prior art systems using a default picture library, the user can use pictures generated by him. When using his own pictures it is supposed that the user remembers the pictures generated by himself better than a number of arbitrary pictures of a default library. It is more likely that a user can make up mnemonics for a sequel of self-generated pictures that can help memorize his personal identification or access input sequence.

The method further preferably comprises receiving an unlock input. By receiving an unlock input at said electronic device, when said electronic device is in a locked state the user can start the unlocking or authorizing procedure. The unlocking may also refer only to parts of a system such as certain applications or the access to a network or services located therein. The unlock-input can represent a power switch input or an unlock input in case of an electronic multi-user device

In an example embodiment of the present invention, said method further comprises receiving a user identification and retrieving a number of pictures from a picture passkey library according to said entered user identification.

By using a user identification such as e.g. username to be entered, or a depicted user icon or photo that can be selected, each user can access a definable selection of passkey pictures for an unlocking or authorizing operation. By using customized passkey picture libraries, different users may prefer different sets of passkey pictures to be displayed for entering a user identification/authentication input or input code. By using user specific passkey pictures or user specific passkey picture libraries even devices with small displays can provide personalized passkey picture sets to different users. By using the present invention, every user can specifically benefit from the present invention independently from an actual selection of passkey picture sets of other users.

In another example embodiment said method further comprises retrieving at least one character being allocated to said pictures related to said input. The pictures and maybe also other user input can be replaced by shorter sequence of digital (e.g. ASCII code). It is assumed that by translating the pictures e.g. in a one or two digit code the comparing operation can be accelerated.

The pictures can be used in addition to a normal set of input characters such as the alphabet, numerals and entities.

According to another aspect of the present invention, a method for generating a picture in a picture passkey library by a user is provided. The picture is to be used in a picture-identification based unlocking or authorizing procedure of a locked electronic device. The method comprises receiving a picture at said electronic device, rendering said received picture to obtain an optimized rendered version of said picture/photo and storing said rendered version of said photo in said picture passkey library.

The picture may be received via a network connection at said electronic device or from a connected storage comprising user-generated pictures. The pictures can be received from a connected digital camera.

In case of e.g. a limited passkey picture library, the method can also comprise the deletion of another picture from said passkey picture library.

In contrast to known picture-based authentication systems providing only fixed libraries of images, the present invention enables the user to utilize any picture database in their electronic device to add new images to the passkey library. By allowing the user to take new pictures and add these to the library, it is even easier for the user to remember the correct passcode. The user will surely remember the faces of his friends, family, pets or other creatures or items better than e.g. the faces of some strangers of a default library.

It may be required to render the images the user takes to be sufficiently small to be compatible with the picture passkey library, which can take some time to process. But this is just a technical issue that can be solved quite easily, especially in regard of the fact that each picture has to be rendered only once. Additionally, the rendering process can provide a data compression thereby reducing the required storage space for the passkey picture library.

In another example embodiment of the present invention, said picture is received from an electronic camera. The camera can be a built in camera or a connectable camera as known e.g. from headset cameras. The picture can be received by user input inducing a camera to take a photo. The present invention enables the user to utilize a camera in his electronic device e.g. a mobile phone to add new images to the passkey library. This can also provide a fun feature for example to a mobile phone that has an integrated camera. The user can change the passcode any time by taking new pictures and adding those to the library. The present invention provides an additional incentive to use and buy electronic devices with built in cameras.

In another example embodiment of the present invention said method further comprises generating at least one character related to said rendered picture and storing said generated at least one character in relation to said rendered/processed version of said photo.

By generating at least one character, a character code that is related to said rendered picture, is generated. Then follows storing said at least one character in relation with said rendered version of said photo in said picture passkey library. The character code can facilitate the comparing operation, as a conventional comparing operation can be used for a sequel of characters or entities representing a picture.

In another example embodiment said method comprises the above mentioned procedures for generating a passcode picture by a user and using said passcode picture in an unlocking operation. The combination of both methods provides the possibility to generate and use a custom-made picture passkey library for the maximum benefit of the user. In multi user applications with username and picture passkey, the picture passkey library can be selected according to an entered username.

According to yet another aspect of the invention, a software tool is provided comprising program code means for carrying out the method of the preceding description when said program product is run on a computer or a network device.

According to another aspect of the present invention, a computer program product downloadable from a server for carrying out the method of the preceding description is provided, which comprises program code means for performing all of the steps of the preceding methods when said program is run on a computer or a network device.

According to yet another aspect of the invention, a computer program product is provided comprising program code means stored on a computer readable medium for carrying out the methods of the preceding description, when said program product is run on a computer or a network device.

According to another aspect of the present invention an electronic device is provided that is capable of being unlocked by picture identification. The device comprises a user-input interface, a picture passkey library, a display, a processing unit and a component to receive pictures.

The user input interface is for receiving an unlocking input or an input for authorizing the use of an electronic device and a user identification input. The unlock input can comprise e.g. the activation of a power switch or in case of a personal computer the `Strg-Alt-Del' key combination or any device-specific user input to start an identification or authorization procedure.

The picture passkey library according to the invention is user editable and enables the user to add, delete and change passkey pictures.

The display is provided for displaying pictures from said picture passkey library. The display can be combined with said user input interface in e.g. a touch screen display. The display can also provide other functionality combined with said user input interface in e.g. a touch screen display.

The processing unit is connected to said user input interface, picture passkey library and said display. The processing unit receives the input from said user input interface and controls the picture library and the display accordingly to perform the above mentioned unlock and picture passkey library editing procedures.

The device according to the invention further comprises a component to receive pictures that can be stored in said picture passkey library, this implements that the picture passkey library is user editable. Thus, the user can choose the passkey pictures that are going to be presented in the next unlocking procedure.

In an example embodiment of the present invention, said electronic device comprises a memory and a lock. Said memory is provided for storing predetermined identification data and is connected to said processing unit. In this example embodiment said processing unit is configured to compare a user input with said predetermined identification data, and to perform an unlocking operation at said lock, if they match.

Said predetermined identification data stored in said memory can comprise e.g. a key sequence or a unlocking code, to be used in a comparing or matching operation to determine if a received user unlocking code is valid or not. The identification data can comprise also a 'hash value' as used in the case of computers to perform said matching operation. When using a hash value, the input sequence is translated or referred to another base of numbers to facilitate the matching operation. Any known base of numbers or characters can be used.

Said lock, can be an electro-mechanic or an electronic lock. In case of an electro-mechanic lock this can be embodied as a padlock, a lock of a safe, or the like. An electro-mechanic lock can be embodied as a lock for a clamshell type portable computer such as a communicator, to prevent an unauthorized opening of said computer. In these cases an unlock operation will be performed by drawing back a bolt or releasing catch. An electronic lock, can be embodied as an electronically operated switch, to grant access to a keyboard or other hardware components by electrically connecting said keyboard to e.g. said processing unit. An electronic lock, can also be embodied as a software implementation, to grant access e.g. to a keyboard or other hardware components by activating/de-activating an input interpreter. Said software embodiment can also be used to lock or unlock the access to certain software applications. Such software locks are known from the area of computer and mobile phone technology.

In another example embodiment of the present invention, said component to receive pictures comprises an electronic camera. When the device comprises a camera, the processing unit is configured to render a picture taken with said camera and to add it to the passkey picture library.

Thus, the present invention enables a user to utilize the camera in or connected to their device to add new images to the passkey library. The user will surely remember the pictures taken by himself better than a default picture set of a default library. The present invention also provides a fun feature for example to a mobile phone that has an integrated camera. The user can change the passcode any time by taking new pictures and adding those to the library. Unlike other conventional applications for mobile device incorporated cameras the passkey picture feature is free of charge.

In yet another example embodiment of the present invention, said electronic device comprises user-specific picture passkey libraries, connected to said processing unit. Thereby different users can use different sets of passkey photos for a personalized use identification/authentication procedure. In case of more than one passkey picture library said processing unit has to be configured to select said user specific passkey library according to a received user identifying input, such as e.g. a usemame. This embodiment is especially useful in the case of multi-user devices.

In yet another example embodiment of the present invention, said electronic device is portable. The present invention can be applied to any kind of display and input enabled devices that require a locking or unlocking functionality such as e.g. mobile telephones, personal digital assistants (PDAs), communicators, palm- and laptop computers and the like.

In yet another example embodiment of the present invention, said electronic device is a mobile phone. Preferably, the mobile phone is a camera phone that has a built in camera module so that a user can take photos and implement them instantaneously in the passkey library.

In the following, the invention will be described in detail by referring to the enclosed drawings in which:
Figure 1 is a flowchart of a picture-based user identification device-unlocking procedure according to one aspect of the present invention,
Figure 2 is an example of the generation of a new picture for the picture passkey library,
Figure 3 is an embodiment of an electronic lock according to one embodiment of the present invention,
Figure 4 is an embodiment of the present invention implemented as a mobile telephone, and
Figure 5 is an embodiment of the present invention implemented as a portable computer device.

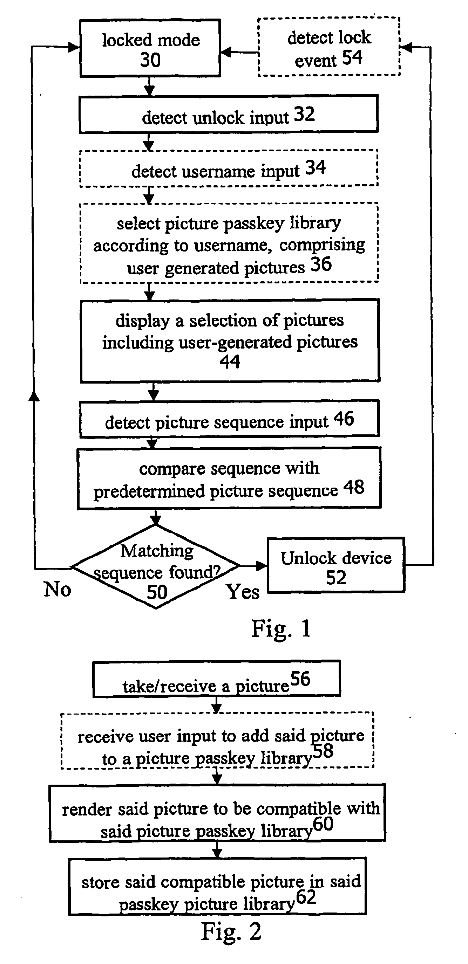

Figure 1 is a flowchart of a picture-based user identification device-unlocking procedure according to one embodiment of the present invention. In the flow chart there are three elements 34,36 and 54 inserted, which may be economized and therefore are outlined with a broken line.

The method starts with a device in a locked mode 30. The locked mode 30 can also comprise a powered down state of the device. In a following step an unlock event or input is detected 32, e.g. a power up input, or a 'log in' input. If intended, e.g. in a multi-user device a usemame or other user identification can be requested from the user. The user is supposed to enter a user identification, which is then detected 34 from the device. The user identification can be entered as a usemame, as a selection of a user-related icon or even by biometric data such as fingerprint input. The user identification is only required for selecting the right passkey picture library for the user to perform a login. The elements 32 and 34 of the flowchart represent only a user identification such as usemame abbreviation or a shorthand symbol, as known from usemame and corresponding password combinations. Based on the usemame the device can select 36 passkey library that comprises user generated passkey pictures. It is also possible to select a subset of all pictures in the passkey library for display.

A selection of passkey pictures is then displayed 44 to the user. The user then enters a picture and/or character sequence as password 46. Tapping on a touch screen display displaying said passkey pictures could perform this. Touch-screen displays have the advantage that the number of inputs to be performed by the user can be reduced to a minimum. Cursor, touch-pad, mouse or tack-ball inputs are also possible.

It may also be possible to scroll different sets of pictures in slot-machine style over a small display to use a greater number of passkey pictures than can be displayed simultaneously on said display.

When the user has entered predetermined number of pictures/entities, or after the user has confirmed his input, the entered sequence of is compared with the actual pre-stored pass sequence 48.

If a match is found 50, the device is unlocked 52, or if no match is fond the device returns in a locked mode 30. The device can stay unlocked until a lock event 54 is detected. A lock event can be induces by e.g. a user input to lock said device or a timer controlled auto-lock function.

Figure 2 is an example of the generation of a new picture for the picture passkey library. The method starts with taking or the receiving of a picture 56. In a next step the device receives a user input indicating that the picture is to be added to the picture passkey library 58. The device then renders the picture to be compatible said picture passkey library. In the same step the storage format of the picture may be adapted to a storage structure used in the picture passkey library. Finally the rendered version is stored in the picture passkey library. The passkey library can be located in a secure element (e.g. smart card) and in order to ensure the integrity of the passkey library various additional security related steps can be performed before anything can be added, modified or deleted in the library.

A user may further select the position said picture is to be displayed on a display during the picture unlocking operation. The picture can be stored with a corresponding character or a corresponding code used during the matching operation to speed up the matching process.

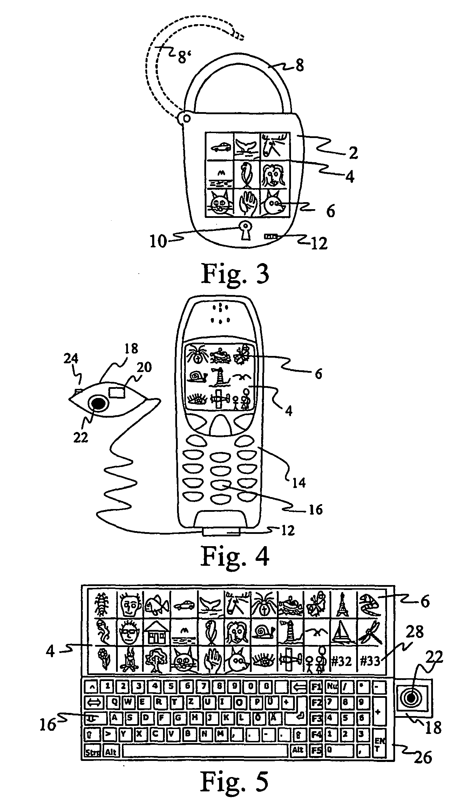

Figure 3 shows an embodiment of an electronic lock according to one embodiment of the present invention. The electronic device is embodied as an electronic padlock. The padlock 2 comprises a touch screen display 4 depicting nine passkey pictures 6, a bolt 8,8' a keyhole 10 and an interface 12. An electronic lock is the most basic implementation of the present invention. As in the case of an electronic combination lock the numeral keys are replaced by the touch screen and the passkey pictures. Instead of typing in a numeral combination a user touches a sequence of pictures as the unlock code. If the right sequence of e.g. four pictures is touched the bolt 8 is unlocked and it can be opened as indicated by position of bolt 8'. The keyhole 10 refers to a mechanic lock to mechanically unlock the padlock e.g. in case of a battery failure or to mechanically override the electronic lock. The padlock 2 further comprises an interface to connect the padlock 2 to a computer or a camera to upload new user generated pictures. The lock comprises a 3x3 grid of 9 different passkey pictures 6 and in the case of a four picture code there are 9⁴=6561 different combinations of passkey picture codes possible.

It should be noted that the format how the pictures are used is not important. It is also possible to implement the invention in a nearly full mechanic way, if the lock is provided with keys in which miniature photos or pictures can be inserted in a way that each of said photos is visible on a single key. When the access to said key photos is only granted if the lock is in an open position, the photos are protected against unauthorized exchange.

Figure 4 is an embodiment of the present invention implemented in a mobile telephone 14. Similar to figure 3 the mobile telephone 14 comprises a touch screen display 4 displaying a 3x3 grid of passkey photos. Additionally, the device comprises a keypad 16. The mobile telephone can receive the input sequence via the touch screen and via the keypad. It is also possible to use a navigation button to scroll the touch screen display 4 content to access additional passkey pictures. The user can input a sequence with a length of four entities, i.e. pictures and numerals. There are ten numerals and (at least) nine passkey pictures, resulting in a total number of at least 19⁴= 130,321 possible combinations.

The mobile phone is provided with a plug in camera module 18, connected to an interface 12. The user can take photos using the viewfinder 20, the lens 22 and the shutter release 24. The photo can be transferred to the mobile phone 14 and can be added to the passkey picture library.

Figure 5 is an embodiment of the present invention implemented as a portable computer device 26. Similar to figures 3 and 4 the portable computer 26 comprises a touch screen display 4. The touch screen display 4 displays an 11x3 grid of passkey photos. Similar to figure 4, the device comprises a keyboard 16. The portable computer device can receive the input sequence via the touch screen and via the keyboard. The user can input a sequence with a length of e.g. four entities, i.e. pictures and numerals and characters. There are 29 characters, ten numerals and 31 passkey pictures, resulting in a total number of (29+10+31)⁴ = 70⁴ = 24,010,000 possible combinations. When using only the passkey pictures with a four-picture sequence there are still 29⁴=923,521 possible combinations.

The 11x3 grid comprises at the lower right side two areas 28 denoted 32# and 33#. These are passkey picture areas the user has not yet filled with his photographs. To fill these areas, the user simply has to use the built in camera 18, with the lens 22 to take a photo and add it to the passkey picture library.

The user benefits from the present invention as he need not longer to memorize a four digit PIN code but can use a mnemonic such as e.g. `go sailing with Jack and Suzie at the lighthouse' to memorize a passkey picture sequence.

The main idea is to allow the user to add new pictures to the picture library (and possibly by using a camera integrated to the device that requires authentication). The format how the pictures are used can vary. For example, the user can select a number of pictures in any order (or in dedicated order if a more secure system is needed) from a grid of pictures (e.g. 4 pictures from a 3x3 grid). Also it is possible to perform a step by step authentication where the user is shown e.g. four different grids successively and the user selects one picture from each grid. It is also possible that the passcode is a combination of pictures and characters. For example, the user is first shown a set of pictures and after choosing the correct one, he has to type a numerical code too. There could be some sort of link between the picture and the code, so that if the user recognizes the picture, then it would be easier for him to remember the code too.

It may be required to render the images the user takes to be sufficiently small to be compatible with the picture passkey library, which can take some time to process. But this is just a technical issue that can be solved quite easily, especially in regard of the fact that each picture has to be rendered only once. The rendering process also provides a data compression so the amount of data required to be stored for each new picture in the picture library is reduced.

The principle behind the invention is that people are extremely good at recognizing faces or images, even though they may be bad at recalling names and even worse, at recalling random sets of characters or numbers that typify PIN codes today. The present invention utilizes this natural human ability as follows. The picture passkey facility already contains a default library of photo images that the user can select a sequence therefrom as a new passkey, but this invention also allows the user to take photos with a camera and add optimized rendered versions of those photos to the picture passkey library. This invention substantially improves the ability of users to remember their terminal authentication passkeys and also permits the users of camera enabled devices to personalize their own picture passkey.

This application contains the description of implementations and embodiments of the present invention with the help of examples. It will be appreciated by a person skilled in the art that the present invention is not restricted to details of the embodiments presented above, and that the invention can also be implemented in another form without deviating from the characteristics of the invention. The embodiments presented above should be considered illustrative, but not restricting. Thus the possibilities of implementing and using the invention are only restricted by the enclosed claims. Consequently, various options of implementing the invention as determined by the claims also belong to the scope of the invention.

## Claims

1. Method for authorizing the use of an electronic device by picture identification, comprising:
- retrieving (36) a number of pictures (6) from a picture passkey library (58), wherein said pictures in said picture passkey library comprise user-generated pictures;
- displaying (44) a subset of said user generated pictures (6) on a display of said electronic device;
- receiving (46) a user input by which at least one of said displayed user generated pictures (6) is selected, said user input representing an input code comprising said at least one selected picture (6);
- comparing (48) said input code comprising said at least one selected picture (6) with predetermined identification data; and
- performing an authorizing operation (52) for the use of the electronic device if said at least one selected picture (6) matches with said predetermined identification data,
wherein at least one of said selected user generated pictures is received from a built-in electronic camera.

2. Method according to claim 1, further comprising receiving (32) an unlocking input.

3. Method according to claim 1 or 2, further comprising:
- receiving (34) a user identification; and
- wherein retrieving said number of pictures (6) from a picture passkey library (58) is performed according to said entered user identification.

4. Method according to claim 1, 2 or 3, further comprising:
- retrieving at least one character being allocated to said pictures (6) related to said input.

5. Method according to anyone of the preceding claims, further comprising:
- receiving (56) a picture (6) at said electronic device,
- processing (60) said received picture to obtain an optimized version of said picture (6); and
- storing (62) said optimized version of said picture (6) in said picture passkey library (58).

6. Method according to one of said preceding claims, further comprising:
- generating at least one character related to said optimized picture (6); and
- storing said at least one character in relation with said optimized version of said picture (6) in said picture passkey library (58).

7. Computer program product comprising program code means stored on a computer readable medium for carrying out the method of anyone of claims 1 to 6 when said program product is run on a computer or network device.

8. Electronic device configured for authorizing the use of said device by picture identification, comprising:
- a picture passkey library (58), wherein pictures in said picture passkey library comprise user-generated pictures;
- a user input interface (16) adapted to retrieve (36) a number of pictures (6) from said picture passkey library (58), ;
- a display (4) adapted to display (44) a subset of said user generated pictures (6) on said display of said electronic device;
**characterized in that**
- said electronic device is adapted to receive a user input by which at least one of said user generated pictures is selected, said user input representing an input code comprising said selected picture,
- a processing unit being adapted to compare (48) said input code comprising said at least one selected picture (6) with predetermined identification data; and
- said electronic device being adapted to perform an authorizing operation (52) for the use of the electronic device if said at least one selected picture (6) matches with said predetermined identification data,
wherein said electronic device comprises a built in electronic camera, wherein said camera is adapted to receive at least one of said user generated pictures, said predetermined identification data matching at least one of said user generated pictures received by said built-in camera.

9. Electronic device according to claim 8, wherein said electronic device comprises
- a memory for storing predetermined identification data, said memory being connected to said processing unit; and
- a lock connected to said processing unit.
wherein said processing unit is configured to compare a user input with said predetermined identification data, and to perform an unlocking operation at said lock, if they match.

10. Electronic device according to anyone of claims 8 or 9, **characterized by** user-specific picture passkey libraries (58), connected to said processing unit.

11. Electronic device according to anyone of claims 8 to 10, **characterized in that** said electronic device is a portable electronic user device.

12. Electronic device according to claim 11, **characterized in that** said electronic device comprises a mobile telephone (14).

## Patentansprüche

1. Verfahren zum Autorisieren der Verwendung einer elektronischen Vorrichtung durch identifizieren von Bildern, unfassend:
- abrufen (36) einer Anzahl Bilder (6) von einer Bilder-Schlüssel-Sammlung (58), wobei die Bilder in der Bilder-Schlüssel-Sammlung, von einem Benutzer erzeugte Bilder umfassen,
- anzeigen (44), eines Teilsatzes der, von einem Benutzer erzeugten Bilder (6) auf einer Anzeige der elektronischen Vorrichtung,
- empfangen (46) einer Benutzereingabe, durch die mindestens eines der angezeigten, von einem Benutzer erzeugte Bilder (6) ausgewählt wird, wobei die Benutereingabe einen Eingabecode darstellt, der das mindestens eine ausgewählte Bild (6) umfasst,
- vergleichen (48) des Eingabecodes, der das mindestens eine ausgewählte Bild (6) umfasst, mit vorbestimmten Identifikationsdaten, und
- durchführen eines Autorisationsvorgangs (52) zur Verwendung der elektronischen Vorrichtung, wenn das mindestens eine ausgewählte Bild (6) und die vorbestimmten Identifikationsdaten zusammenpassen, wobei mindestens eines der ausgewählten, von einem Benutzer erzeugte Bilder von einer eingebauten elektronischen Kamera aufgenommen wurde.

2. Verfahren gemäß Anspruch 1, weiter umfassend empfangen (32) einer Eingabe zum Entsperren.

3. Verfahren gemäß Anspruch 1 oder 2, weiter umfassend:
- empfangen (34) einer Benutzeridentifizierung, und
wobei das Abrufen der Anzahl von Bildern (6) von einer Bilder-Schlüssel-Sammlung (58), gemäß der eingegebenen Benutzeridentifizierung durchgeführt wird.

4. Verfahren gemäß Anspruch 1, 2 oder 3, weiter umfassend:
- abrufen mindestens eins Zeichens, das den Bildern (6) zugewiesen ist und mit der Eingabe in Verbindung steht.

5. Verfahren gemäß einem der vorstehenden Ansprüche, weiter umfassend:
- empfangen (56) eines Bildes (6) an der elektronischen Vorrichtung,
- bearbeiten (60) des empfangenen Bildes, um eine optimierte Version des Bildes (6) zu erhalten, und
- speichern (62) der optimierten Version des Bildes (6) in der Bilder-Schlüssel-Sammlung (58).

6. Verfahren gemäß einem der vorstehenden Ansprüche, weiter umfassend:
- erzeugen mindestens eines Zeichens, das mit dem optimierten Bild (6) in Verbindung steht, und
- speichern des mindestens einen Zeichens in Verbindung mit der optimierten Version des Bildes (6) in der Bilder-Schlüssel-Sammlung (58).

7. Computerprogrammprodukt umfassend Programmcodemitel, die auf einem computerlesbaren Medium gespeichert sing, zum Ausführen des Verfahrens irgendeines der Ansprüche 1 bis 6, wenn das Programmprodukt auf einem Computer oder einer Netzwerkvorrichtung ausgeführt wird.

8. Elektronische Vorrichtung, eingerichtet, um die Verwendung der Vorrichtung durch identifizieren von Bildern zu autorisieren, umfassend:
- eine Bilder-Schlüssel-Sammlung (58), wobei die Bilder in der Bilder-Schlüssel-Sammlung von einem Benutzer erzeugte Bilder umfassen,
- eine Benutzereingabeschnittstelle (16), angepasst eine Anzahl von Bildern (6) von der Bilder-Schlüssel-Sammlung (58) abzurufen (36),
- eine Anzeige (4) angepasst, um einen Teilsatz der, von einem Benutzer erzeugten Bilder (6) auf der Anzeige der elektronischen Vorrichtung anzuzeigen (44),
**dadurch gekennzeichnet, dass**
- die elektronische Vorrichtung angepasst ist, eine Benutzereingabe zu empfangen, durch die mindestens eines der von einem Benutzer erzeugten Bilder ausgewählt wird,
wobei die Benutzereingabe einen Eingabecode darstellt, der das ausgewählte Bild umfasst,
- eine Verarbeitungseinheit, die angepasst ist, den Eingabecode der, das mindestens eine ausgewählte Bild (6) umfasst, mit vorbestimmten Identifikationsdaten zu vergleichen (48), und wobei die elektronische Vorrichtung angepasst ist, einen Autorisierungsvorgang (52) zum Verwenden der elektronischen Vorrichtung auszuführen, wenn das mindestens eine ausgewählte Bild (6) mit den vorbestimmten Identifikationsdaten zusammenpasst,
wobei die elektronische Vorrichtung eine eingebaute elektronische Kamera umfasst, wobei die Kamera angepasst ist, mindestens eines der von einem Benutzer erzeugten Bilder zu empfangen, und wobei die vorbestimmten Identifikationsdaten mit mindestens einem der, von einem Benutzer erzeugten Bilder, die durch die eingebaute Kamera empfangen wurden, zusammenpassen.

9. Elektronische Vorrichtung gemäß Anspruch 8, wobei die elektronische Vorrichtung umfasst:
- einen Speicher zum Speichern von vorbestimmten Identifikationsdaten, wobei der Speicher mit der Verarbeitungseinheit verbunden ist, und
- einem Schloss, das mit der Verarbeitungseinheit verbunden ist,
- wobei die Verarbeitungseinheit eingerichtet ist, um eine Benutzereingabe mit den vorbestimmten Identifikationsdaten zu vergleichen, und um einen Entsperrvorgang an dem Schloss durchzuführen, wenn sie zusammenpassen.

10. Elektronische Vorrichtung gemäß einem der Ansprüche 8 oder 9, **gekennzeichnet durch** benutzerspezifische Bilder-Schlüssel-Sammlungen (58), die mit der Verarbeitungseinheit verbunden sind.

11. Elektronische Vorrichtung gemäß einem der Ansprüche 8 bis 10, **dadurch gekennzeichnet, dass** die elektronische Vorrichtung eine tragbare elektronische Benutzervorrichtung ist.

12. Elektronische Vorrichtung gemäß Anspruch 11, **dadurch gekennzeichnet, dass** die elektronische Vorrichtung ein Mobiltelefon (14) umfasst.

## Revendications

1. Procédé pour autoriser l'usage d'un dispositif électronique au moyen d'une identification pictographique, comportant les étapes consistant à:
- récupérer (36) un nombre d'images (6) à partir d'une bibliothèque de clés d'accès pictographiques (58), dans laquelle lesdites images dans ladite bibliothèque de clés d'accès pictographiques comportent des images générées par l'utilisateur ;
- afficher (44) un sous-ensemble desdites images générées par l'utilisateur (6) sur un écran d'affichage dudit dispositif électronique ;
- recevoir (46) une entrée d'utilisateur par laquelle au moins l'une desdites images générées par l'utilisateur affichées (6) est sélectionnée, ladite entrée d'utilisateur représentant un code d'entrée comportant ladite au moins une image sélectionnée (6) ;
- comparer (48) ledit code d'entrée comportant ladite au moins une image sélectionnée (6) à des données d'identification prédéterminées ; et
- mettre en oeuvre une opération d'autorisation (52) pour l'usage du dispositif électronique si ladite au moins une image sélectionnée (6) correspond auxdites données d'identification prédéterminées,
dans lequel au moins l'une desdites images générées par l'utilisateur sélectionnées est reçue à partir d'une caméra électronique intégrée.

2. Procédé selon la revendication 1, comportant en outre l'étape consistant à recevoir (32) une entrée de déverrouillage.

3. Procédé selon la revendication 1 ou 2, comportant en outre les étapes consistant à:
- recevoir (34) une identification d'utilisateur ; et
- dans lequel l'étape consistant à récupérer ledit nombre d'images (6) à partir d'une bibliothèque de clés d'accès pictographiques (58) est mise en oeuvre selon ladite identification d'utilisateur entrée.

4. Procédé selon la revendication 1, 2 ou 3, comportant en outre l'étape consistant à:
- récupérer au moins un caractère étant attribué auxdites images (6) connexes à ladite entrée.

5. Procédé selon l'une quelconque des revendications précédentes, comportant en outre les étapes consistant à :
- recevoir (56) une image (6) au niveau dudit dispositif électronique,
- traiter (60) ladite image reçue pour obtenir une version optimisée de ladite image (6) ;
- stocker (62) ladite version optimisée de ladite image (6) dans ladite bibliothèque de clés d'accès pictographiques (58).

6. Procédé selon l'une quelconque desdites revendications précédentes, comportant en outre les étapes consistant à :
- générer au moins un caractère connexe à ladite image optimisée (6) ; et
- stocker ledit au moins un caractère en relation avec ladite version optimisée de ladite image (6) dans ladite bibliothèque de clés d'accès pictographiques (58).

7. Produit-programme informatique comportant des moyens de code de programme stockés sur un support lisible par ordinateur pour mettre en oeuvre le procédé selon l'une quelconque des revendications 1 à 6 lorsque ledit produit-programme est exécuté sur un ordinateur ou un dispositif de réseau.

8. Dispositif électronique configuré pour autoriser l'usage dudit dispositif au moyen d'une identification pictographique, comportant :
- une bibliothèque de clés d'accès pictographiques (58), où des images dans ladite bibliothèque de clés d'accès pictographiques comportent des images générées par l'utilisateur ;
- une interface d'entrée d'utilisateur (16) apte à récupérer (36) un nombre d'images (6) à partir de ladite bibliothèque de clés d'accès pictographiques (58) ;
- un écran d'affichage (4) apte à afficher (44) un sous-ensemble desdites images générées par l'utilisateur (6) sur ledit écran d'affichage dudit dispositif électronique ;
**caractérisé en ce que**
- ledit dispositif électronique est apte à recevoir une entrée d'utilisateur par laquelle au moins l'une desdites images générées par l'utilisateur est sélectionnée, ladite entrée d'utilisateur représentant un code d'entrée comportant ladite image sélectionnée,
- une unité de traitement étant apte à comparer (48) ledit code d'entrée comportant au moins une image sélectionnée (6) à des données d'identification prédéterminées; et
- ledit dispositif électronique étant apte à mettre en oeuvre une opération d'autorisation (52) pour l'usage du dispositif électronique si ladite au moins une image sélectionnée (6) correspond auxdites données d'identification prédéterminées, dans lequel ledit caméra est apte à recevoir au moins l'une desdites images générées par l'utilisateur, lesdites données d'identification prédéterminées correspondant à au moins l'une desdites images générées par l'utilisateur reçues par ladite caméra intégrée.

9. Dispositif électronique selon la revendication 8, dans lequel ledit dispositif électronique comporte
- une mémoire pour stocker des données d'identification prédéterminées, ladite mémoire étant connectée à ladite unité de traitement ; et
- un verrou connecté à ladite unité de traitement,
dans lequel ladite unité de traitement est configurée pour comparer une entrée d'utilisateur auxdites données d'identification prédéterminées, et pour mettre en oeuvre une opération de déverrouillage au niveau dudit verrou, en cas de correspondance.

10. Dispositif électronique selon l'une quelconque des revendications 8 ou 9, **caractérisé par** des bibliothèques de clés d'accès pictographiques spécifiques à l'utilisateur (58), connectées à ladite unité de traitement.

11. Dispositif électronique selon l'une quelconque des revendications 8 à 10, **caractérisé en ce que** ledit dispositif électronique est un dispositif utilisateur électronique portable.

12. Dispositif électronique selon la revendication 11, **caractérisé en ce que** ledit dispositif électronique comprend un téléphone mobile (14).
